# EUROPÄISCHE PATENTANMELDUNG

(11) **EP 2 462 854 A1**
(43) Veröffentlichungstag der Anmeldung: **13.06.2012**
(21) Anmeldenummer: 10401215.8
(22) Anmeldetag: 09.12.2010
(51) Int. Cl.: A47L 9/14

(54) **System bestehend aus einem Staubsauger und einem Staubbeutel**

(71) Anmelder: Miele & Cie. KG, 33332 Gütersloh (DE)
(72) Erfinder: Ennen, Dr., Günther, 32130, Enger (DE); Kornberger, Dr., Martin, 33739, Bielefeld (DE); Sailer, Dr., Eduard, 33428, Harsewinkel (DE); Tiekötter, Stefan, 33699, Bielefeld (DE)

(57) **Zusammenfassung**

Es wird ein System bestehend aus einem Staubsauger (1) und einem dafür vorgesehenen Staubbeutel (10), wobei der Staubsauger (1) einen Staubraum (2) mit Staubraumrippen (3) und der Staubbeutel (10) auf einer Stützstruktur (12) ein Vlies (13) aufweist, angegeben, bei dem das Vlies (13) eine Mehrzahl von Vlieswellen (14) ausbildet und ein Abstand der Vlieswellen (14) auf einen Abstand der Staubraumrippen (3) abgestellt ist.

## Beschreibung

Die vorliegende Erfindung betrifft ein System, das einen Staubsauger und einen für den Staubsauger als Staubsammelorgan vorgesehenen Staubbeutel umfasst. Staubsauger und Staubbeutel sind an sich bekannt. Auch eine Kombination von Staubsauger und Staubbeutel, also ein Staubsauger mit einem Staubbeutel, ist an sich bekannt.

Handelsübliche Staubsauger enthalten als Staubsammelorgan üblicherweise einen mehr oder weniger forminstabilen Staubbeutel, der beim Betrieb des Staubsaugers kontinuierlich mit Staub gefüllt wird. Im Staubsauger wird der Staubbeutel von einem als Staubraum bezeichneten Volumen umschlossen. Der Staubraum bietet dem Staubbeutel einerseits ein Gegenlager und ist damit zur Stabilisierung des Staubbeutels beim Betrieb des Staubsaugers wirksam. Andererseits dient der Staubraum auch zur Führung und Leitung von aus dem Staubbeutel austretender und wesentlich vom Staub befreiter Strömungsluft. Bei Beaufschlagung des Staubbeutels mit Strömungsluft legen sich die Seiten des Staubbeutels allerdings teilweise an die Wände des Staubraums und behindern somit die optimale Durchströmung des Beutels. Dies führt mitunter dazu, dass vom Staubbeutel umfasste Vlieslagen oder der Staubbeutel selbst nicht optimal mit Staub beladen werden, was sich in einer reduzierten Standzeit des Staubbeutels wiederspiegelt. Der Staubraum definiert praktisch die Form des Staubbeutels bei Beaufschlagung mit dem durch das Gebläse erzeugten Luftstrom. Des Weiteren wird beim Ausschalten des Staubsaugergebläses ein sich beim Saugen ergebender Staubbelag nicht von den Innenseiten des Staubbeutels abgeworfen, was sich ebenfalls negativ auf die Standzeit und auch die Gleichförmigkeit oder Gleichmäßigkeit der Saugleistung auswirkt.

Die US 4,145,196 befasst sich mit einer Optimierung eines Filterelements für einen Staubsauger und hat sich zur Aufgabe gestellt, Beschädigungen des Filterelements und eines davon umfassten Filtervlieses zu vermeiden. Das Filterelement umfasst einen Sack, auf dessen Innenseite sich das Filtervlies befindet. Zwischen einem äußeren Gehäuse und dem Filterelement ist ein Abstandshalter mit einer gewellten Oberfläche angeordnet. Im Betrieb liegt das Filterelement an den innenseitigen Scheitelpunkten der gewellten Oberfläche an. Die gewellte Oberfläche und deren Scheitelpunkte entsprechen damit hinsichtlich ihrer Funktion im Wesentlichen rippenförmigen Strukturen, wie sie als Staubraumrippen in einen Staubraum aktueller Staubsauger hineinragen. Beide sollen einen großflächigen Kontakt des Staubbeutels bzw. bei der US 4,145,196 des dortigen Sacks mit seinem Filtervlies mit Strukturelementen des Staubsaugergehäuses verhindern und damit dessen Durchströmbarkeit aufrechterhalten. Zur Stabilisierung des Filterelements ist bei der US 4,145,196 für den Sack eine gitterförmige Stabilisierungsstruktur vorgesehen und eine Öffnungsweite von durch das Gitter gebildeten Maschen ist kleiner als der Abstand zweier benachbarter Scheitelpunkte der gewellten Oberfläche des Abstandshalters. Das Gitter soll eine ansonsten gegebene abschnittsweise Beweglichkeit des Filtervlieses in eine Kehle zwischen je zwei benachbarten Scheitelpunkten der gewellten Oberfläche verhindern. Eine Verringerung der Beweglichkeit soll wiederum eine Beschädigung des Filterelements verhindern.

Eine Aufgabe der Erfindung besteht entsprechend darin, einen Staubbeutel so zu verbessern, dass Druckverluste vermieden oder reduziert werden, die sich ergeben, wenn der Staubbeutel abschnittsweise oder großflächig mit einer Wand des Staubraums in Kontakt kommt. Eine Aufgabe der Erfindung besteht hiervon ausgehend weiterhin auch darin, als System einen Staubsauger und einen für den Staubsauger vorgesehenen, so verbesserten Staubbeutel anzugeben.

Diese Aufgabe wird mit einem System bestehend aus einem Staubsauger und einem dafür vorgesehenen Staubbeutel, wobei der Staubsauger einen Staubraum mit Staubraumrippen und der Staubbeutel auf einer Stützstruktur ein Vlies aufweist, durch eine Mehrzahl von Vlieswellen in dem Vlies und einen auf einen Abstand der Staubraumrippen abgestellten Abstand der Vlieswellen gelöst. Einerseits ist also das Vlies auf der Stützstruktur so angebracht, dass es eine Mehrzahl von Vlieswellen ausbildet. Zu diesem Zweck sind die Vlieswellen nur im Bereich eines Übergangs von einer Vlieswelle zur benachbarten Vlieswelle mit der Stützstruktur verbunden, z.B. verklebt, vernäht, usw. Andererseits ist ein Abstand der Vlieswellen auf einen Abstand der Staubraumrippen abgestellt. Durch diese Abstimmung des Abstandes der Vlieswellen auf den Abstand der Staubraumrippen wird ein Kontakt des Staubbeutels mit dem Staubraum und dessen Wandungen, also ein partielles oder großflächiges Anliegen von Abschnitten des Staubbeutels an der Innenoberfläche des Staubraums, vermieden.

Bevorzugt ist der Abstand dabei auf einen Abstand freier Enden der Staubraumrippen abgestellt, wobei als freies Ende ein in den Staubraum ragendes Ende aufgefasst wird. Speziell, wenn dafür eine Bogenweite der Vlieswellen oder ganzzahlige Vielfache einer solchen Bogenweite zumindest genauso groß wie der Abstand der Staubraumrippen ist, ermöglicht dies bei im Staubraum angebrachtem Staubbeutel eine Lage jeweils einer Vlieswelle mit ihrem Scheitelpunkt vor einer Staubraumrippe oder eine Lage von einer Vlieswelle oder mehreren Vlieswellen in dem Raum zwischen je zwei benachbarten Staubraumrippen. Der Staubbeutel wird damit also sehr gleichmäßig positioniert. Zudem verhindern die Staubraumrippen, wenn deren wirksame Länge größer als eine Höhe der Vlieswellen ist, einen Kontakt der Vlieswellen mit den äußeren Begrenzungsflächen des Staubraums. Eine Durchströmbarkeit der Vlieswellen bleibt dann gewährleistet. Wenn des Weiteren Spitzen oder freie Enden der Staubraumrippen in Zwischenräume zwischen je zwei Vlieswellen eingreifen, bewirkt dies eine besonders günstige Positionierung des Staubbeutels, denn dann sind die Staubraumrippen zur Fixierung und Justierung der Vlieswellen und damit des Staubbeutels insgesamt wirksam. Insbesondere wird durch die Fixierung jeweils eines Zwischenraums mit einem freien Ende jeweils einer Staubraumrippe ein Verschieben von Abschnitten des Staubbeutels im Staubraum verhindert. In Fortführung dieser Aspekte kommt genauso eine Anordnung der Staubraumrippen im Staubraum derart in Betracht, dass einige Staubraumrippen zur Justierung des Staubbeutels in einen Zwischenraum zwischen jeweils zwei Vlieswellen eingreifen und dass andere Staubraumrippen jeweils eine Vlieswelle im Bereich ihres Scheitelpunktes abstützen.

Ganz allgemein lassen sich Vorteile der Erfindung und ihrer Ausgestaltung wie folgt zusammenfassen: Der Staubbeutel oder eine sonstige Filtrationsvorrichtung nach Art eines Staubbeutels oder mit ähnlichem Bestimmungszweck wie ein Staubbeutel stabilisiert sich durch die Stützstruktur selbst. Die Vlieswellen ermöglichen eine hohe Staubspeicherfähigkeit und eine strömungsoptimierte Anordnung am Anbringungsort, z.B. einem Staubraum eines Staubsaugers. Mit der strömungsoptimierten Anordnung geht schließlich im Betrieb eine homogene Beladung des Staubbeutels mit Staub einher. Mit der durch die Vlieswellen bedingten wellenförmigen Oberfläche wird erreicht, dass der Staubbeutel nur punkt- oder linienförmig an einem umgebenden Volumen am Anbringungsort, z.B. einem Staubraum, anliegt. Dies vermeidet Strömungsverluste, wie sie ansonsten mit einem flächigen Kontakt mit einem umgebenden Volumen einhergehen.

Ausgestaltungen der Erfindung sind Gegenstand der Unteransprüche. Dabei verwendete Rückbeziehungen weisen auf die weitere Ausbildung des Gegenstands des Hauptanspruchs durch die Merkmale des jeweiligen Unteranspruchs hin. Sie können auch selbständige Erfindungen enthalten, die eine von den Gegenständen der vorhergehenden Ansprüche unabhängige Gestaltung aufweisen und sind nicht als ein Verzicht auf die Erzielung eines selbständigen, gegenständlichen Schutzes für deren Merkmale zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

In einer Ausführungsform des Systems ist die Stützstruktur des Staubbeutels zur Definition einer an den Staubraum angepassten Geometrie des Staubbeutels wirksam. Es legt also nicht mehr der Staubraum des Staubsaugers die Form des Staubbeutels fest. Stattdessen wird die Geometrie des Staubbeutels durch diesen selbst definiert. Ein Staubbeutel mit einer so festgelegte Geometrie benötigt zu seiner Stabilisierung den Staubraum nicht mehr.

In einer weiteren Ausführungsform ist die Stützstruktur des Staubbeutels quer zu einer Längsrichtung der Vlieswellen dehnbar. Der Vorteil dieses Aspekts der Erfindung besteht darin, dass die Dehnbarkeit der Stützstruktur ein Auffalten der Vlieswellen bewirkt oder erlaubt. Bei gedehnter Stützstruktur erhöht sich mit dem Auffalten der Vlieswellen einerseits die wirksame Oberfläche des Staubbeutels, außerdem definiert der Staubbeutel selbst seine Form und sein Volumen im aufgefalteten/durchströmten Zustand. Speziell bewirkt dabei eine Dehnung der Stützstruktur ein Auffalten von jeweils einer Vlieswelle vor einer Staubraumrippe oder ein Auffalten von einer Vlieswelle oder mehreren Vlieswellen in den Raum zwischen je zwei benachbart angeordneten Staubraumrippen. Der Staubbeutel wird damit also sehr gleichmäßig aufgefaltet. Zudem verhindern die Staubraumrippen, wenn deren wirksame Länge größer als eine Höhe der aufgefalteten Vlieswellen ist, auch bei einer dehnbaren Stützstruktur einen Kontakt der Vlieswellen mit den äußeren Begrenzungsflächen des Staubraums. Eine Durchströmbarkeit der Vlieswellen bleibt dann auch hier gewährleistet. Wenn des Weiteren bei gedehnter Stützstruktur Spitzen oder freie Enden der Staubraumrippen in Zwischenräume zwischen je zwei Vlieswellen eingreifen, bewirkt dies eine besonders günstige Positionierung des Staubbeutels, denn dann sind auch bei dehnbarer Stützstruktur die Staubraumrippen zur Fixierung und Justierung der Vlieswellen und damit des Staubbeutels insgesamt wirksam. Insbesondere wird durch die Fixierung jeweils eines Zwischenraums mit einem freien Ende jeweils einer Staubraumrippe ein Verschieben von Abschnitten des Staubbeutels im Staubraum verhindert. In Fortführung dieser Aspekte kommt genauso eine Anordnung der Staubraumrippen im Staubraum derart in Betracht, dass einige Staubraumrippen zur Justierung des Staubbeutels in einen Zwischenraum zwischen jeweils zwei Vlieswellen eingreifen und dass vor anderen Staubraumrippen, insbesondere der Mehrzahl der Staubraumrippen, eine Auffaltung von jeweils einer Vlieswelle erfolgt. In einer funktionalen Umkehr dieses Aspekts kann genauso ein bisheriger oder gleichmäßiger Abstand der Staubraumrippen im Staubraum beibehalten werden und der Eingriff einzelner Staubraumrippen in einen Zwischenraum zwischen je zwei benachbarten Vlieswellen einerseits und ein Auffalten weiterer Vlieswellen vor einer Staubraumrippe andererseits durch geeignet variierte Größen oder Bogenlängen der Vlieswellen entlang der Außenoberfläche des Staubbeutels erreicht werden.

Wenn ein von einem Gebläse des Staubsaugers generierter Luftstrom eine Dehnung der Stützstruktur bewirkt, ergibt sich ein mit der Dehnung der Stützstruktur erreichbares Volumen des Staubbeutels und/oder eine mit der Dehnung der Stützstruktur erreichbare Geometrie unmittelbar mit der Inbetriebnahme des Staubsaugers und der Aktivierung dessen Gebläses. Darüber hinaus können Stützstruktur und Vlieswellen so ausgestaltet sein, dass die Dehnung der Stützstruktur zurückgeht, sobald das Gebläse des Staubsaugers abgeschaltet wird. Dadurch fällt innerhalb der Vlieswellen gesammelter Staub wieder vom Vlies ab. Das beim normalen Betrieb des Staubsaugers erforderliche Ein- und Ausschalten des Gebläses bewirkt also praktisch eine Regeneration des Vlieses.

Wenn der von dem Gebläse generierte Luftstrom eine Dehnung der Stützstruktur des Staubbeutels derart bewirkt, dass sich der auf den Abstand der Staubraumrippen abgestellte Abstand der Vlieswellen einstellt, stellt sich unmittelbar nach der Inbetriebnahme des Staubsaugers ohne einen flächigen Kontakt des Staubbeutels mit dem Staubraum die für den Staubbeutel vorgesehene Geometrie ein. Insbesondere ergibt sich dabei der auf den Abstand der Staubraumrippen abgestellte Abstand der Vlieswellen bei maximal gedehnter Stützstruktur und diese maximale Dehnung der Stützstruktur wiederum aufgrund des im normalen Betrieb des Staubsaugers generierten Luftstroms.

Wenn sich eine hier als freier Strömungsquerschnitt des Staubbeutels bezeichnete wirksame Fläche bei Beaufschlagung mit dem Luftstrom verdoppelt oder im Wesentlichen verdoppelt, steht die so vergrößerte wirksame Fläche für die Staubaufnahme zur Verfügung, so dass einerseits die Staubentnahme aus dem Luftstrom verbessert ist und sich andererseits eine sogenannte Standzeit des Staubbeutels, also eine Verwendbarkeitsdauer, erhöht.

Nachfolgend wird ein Ausführungsbeispiel der Erfindung anhand der Zeichnung näher erläutert. Einander entsprechende Gegenstände oder Elemente sind in allen Figuren mit gleichen Bezugszeichen versehen.

Das oder jedes Ausführungsbeispiel ist nicht als Einschränkung der Erfindung zu verstehen. Vielmehr sind im Rahmen der vorliegenden Offenbarung zahlreiche Abänderungen oder Modifikationen möglich, insbesondere solche, die z. B. durch Kombination oder Abwandlung von einzelnen, in Verbindung mit den in der allgemeinen Beschreibung, des oder jedes Ausführungsbeispiels sowie den Ansprüchen beschriebenen und in den Zeichnungen enthaltenen Merkmalen oder daraus ersichtlichen Verfahrensschritten für den Fachmann im Hinblick auf die Lösung der Aufgabe entnehmbar sind und durch kombinierbare Merkmale zu einem neuen Gegenstand oder zu neuen Verfahrensschritten oder Verfahrensschrittfolgen führen. Es zeigt
- Fig. 1: einen Staubsauger,
- Fig. 2: einen Staubbeutel,
- Fig. 3: eine besondere, strukturierte Ausführungsform eines Vlieses eines Staubbeutels,
- Fig. 4: einen Schnitt durch den Staubsauger mit dessen Staubraum und dabei die Anordnung des Staubbeutels,
- Fig. 5a: und
- Fig. 5b: eine Schnittdarstellung durch einen Abschnitt eines Staubbeutels (Staubbeutelwandabschnitt),
- Fig. 6: eine Ausführungsform der Staubbeutelwand mit streifenförmigen Stützelementen,
- Fig. 7, 8, 9: dynamische Staubsaugerbeutelformen, wie sie mit in geeigneter Position und Orientierung angebrachten, insbesondere dehnbaren Stützstrukturen oder Stützelementen möglich sind und
- Fig. 10: einen Staubbeutel mit durch Vlieswellen strukturierter Oberfläche und mit gedehnten Stützstrukturen, also mit Luftstrom beaufschlagt, in einem Staubraum eines Staubsaugers.

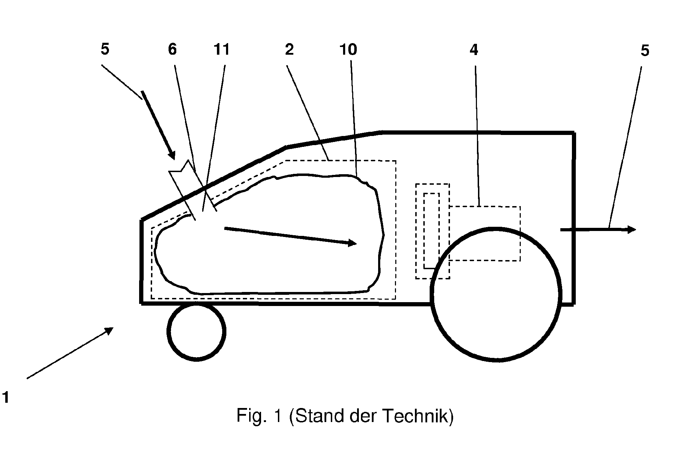

Fig. 1 zeigt schematisch vereinfacht einen bekannten Staubsauger 1 mit einem in einem Staubraum 2 angebrachten Staubbeutel 10. Von einem Gebläse 4 wird ein Luftstrom 5 durch den Staubsauger 1 und damit auch durch den Staubbeutel 10 erzeugt. Die Zuführung des Luftstroms 5 in den Staubbeutel 10 durch eine Beutelöffnung 11 geschieht über einen Schlauch 6.

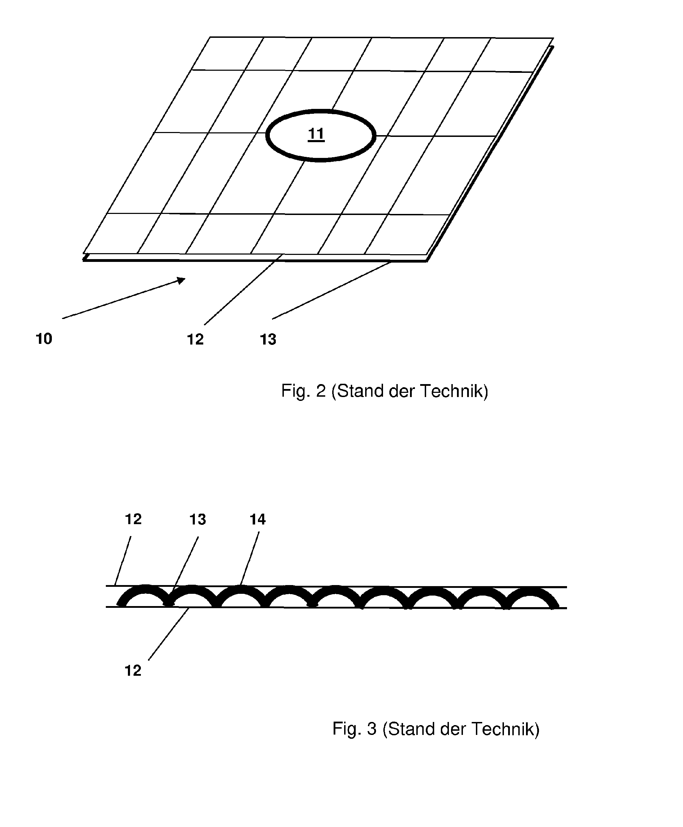

Fig. 2 zeigt schematisch vereinfacht den prinzipiellen Aufbau eines handelsüblichen Staubbeutels 10. Neben dem eigentlichen Vlies 13 zur Speicherung insbesondere kleinerer Staubpartikel weist der Staubbeutel 10 an seiner Oberseite noch eine statische, netzförmige Stützstruktur 12 auf, die den Beutel 10 mechanisch stabilisiert und darüber hinaus den Staubbeutel 10 beim Aufsaugen scharfer Gegenstände gegen Beschädigung schützt.

Fig. 3 zeigt eine besondere, strukturierte Ausführungsform eines Vlieses 13 eines Staubbeutels 10. Das Vlies 13 ist wellen- oder höckerförmig ausgebildet, um eine größere Filterfläche und damit eine höhere Staubspeicherfähigkeit bereitzustellen.

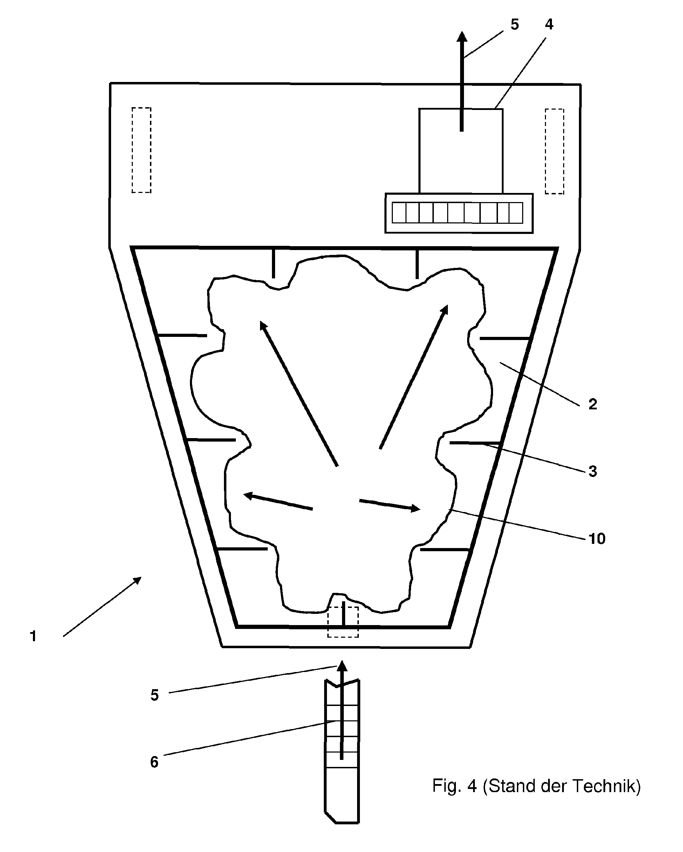

Fig. 4 zeigt in Draufsicht einen Schnitt durch den Staubsauger 1 mit dessen Staubraum 2 und dabei die Anordnung des Staubbeutels 10 im Staubraum 2. Der Staubbeutel 10 wird an mehreren Punkten durch Staubraumrippen 3 gestützt, die verhindern, dass sich der Staubbeutel 10 abschnittsweise oder vollständig an die Wände des Staubraums 2 anlegt und dadurch die Durchströmung des Staubbeutels 2 erheblich behindert wird. Dennoch ragt der Staubbeutel im Betrieb des Staubsaugers 1 und durch Beaufschlagung mit dem Luftstrom 5 in die Bereiche zwischen den Staubraumrippen 3 des Staubraums 2 und berührt teilweise die Wände des Staubraums 2.

Der Stand der Technik bietet demzufolge keine Lösung, die verhindert, dass sich der Staubbeutel 10 an die Wände des Staubraums 2 anlegt.

Ein zentraler Aspekt der Anmeldung besteht dementsprechend darin, eine insbesondere für einen Staubbeutel 10 verwendbare Filtrationsvorrichtung bereitzustellen, die den Staubraum 2 nur punktuell, also nicht flächig oder zumindest nicht großflächig, also z.B. nur die Spitzen der Staubraumrippen 3 ("eindimensional"), berührt.

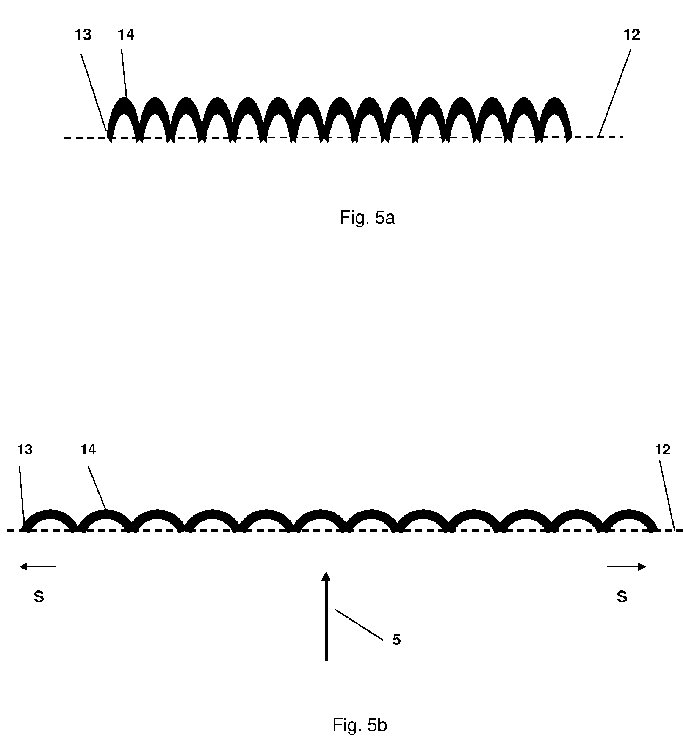

Fig. 5a und Fig. 5b zeigen zur Verdeutlichung eines Aufbaus der vorgeschlagenen Filtrationsvorrichtung bzw. des vorgeschlagenen Staubbeutels 10 eine Schnittdarstellung durch einen Abschnitt einer Filtrationsvorrichtung bzw. einer Beutelfläche - eines Wandbereichs - des Staubbeutels 10. Dargestellt ist nur der Abschnitt der Beutelfläche. Der Staubbeutel 10 selbst ist damit in seiner Gesamtheit nicht erkennbar. Hier und im Folgenden werden die Begriffe Staubbeutel, Staubbeutelfläche oder Staubbeutelwand einerseits und Filtrationsvorrichtung andererseits synonym verwendet, so dass sich jede Erwähnung des Staubbeutels oder seiner Bestandteile entsprechend auch auf die umfasste Filtrationsvorrichtung oder eine in anderem Zusammenhang verwendbare Filtrationsvorrichtung bezieht.

Gemäß Fig. 5a und Fig. 5b enthält der Staubbeutel 10 ein Vlies 13, das aufgrund einer wellenförmigen Struktur, Plissierung oder dergleichen eine Mehrzahl von Vlieswellen 14 aufweist oder ausbildet. Die einzelnen Vlieswellen 14 sind innenseitig durch eine Stützstruktur 12 in regelmäßigen oder gleich großen Abständen fixiert. Dabei sind die Vlieswellen 14 nur im Bereich der Übergänge von einer Vlieswelle 14 zur jeweils benachbarten Vlieswelle 14 mit der Stützstruktur 12 verbunden, z.B. vernäht, verklebt, usw.. Die Verbindung kann dabei punktuell oder linienförmig oder mit Mischformen solcher punktuellen oder linienförmigen Verbindungen hergestellt sein. Die Stützstruktur 12 kann elastisch oder dehnbar sein. Die Stützstruktur 12 gibt zusammen mit dem Vlies 13 und den Vlieswellen 14 die Form des Staubbeutels 10 vor. Bei einer elastischen Stützstruktur 12 ergibt sich die Form des Staubbeutels 10 bei Beaufschlagung mit dem Luftstrom 5. Der Staubbeutel 10 weist dann eine dynamische Staubbeuteloberfläche auf.

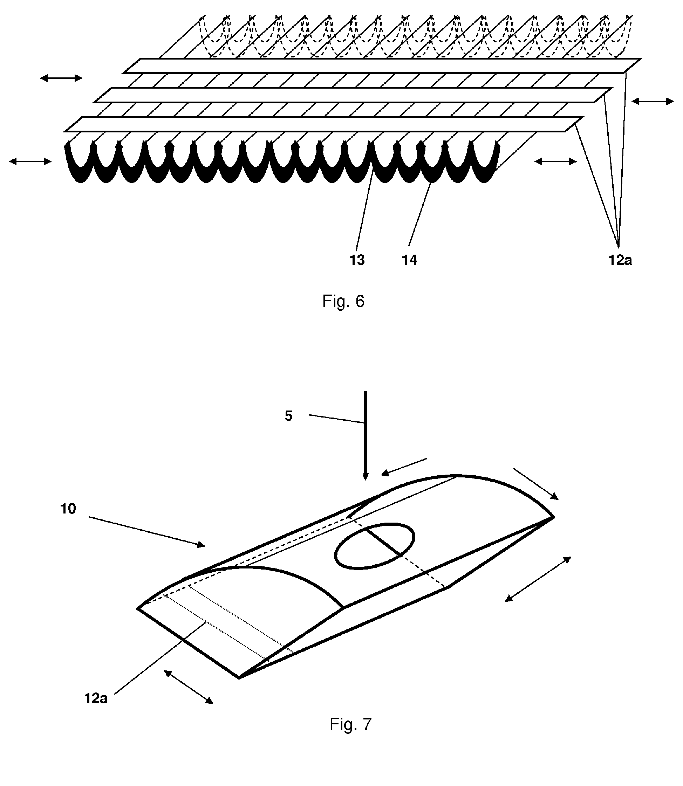

Bei einer dehnbaren Stützstruktur 14 ist diese im mit dem Luftstrom 5 unbeaufschlagten Zustand entspannt und damit die Öffnungsweite der Vlieswellen 14 minimal (Fig. 5a), wobei die Stützstruktur 12 vorzugsweise als Gitter oder auch in der Form von quer zur Längsausrichtung der Vlieswellen 14 orientierten Stützelementen 12a, z.B. in Form von Bändern, ausgeführt sein kann (Fig. 6). Die Elastizität der Stützstruktur 12 ist dabei so gewählt, dass auch bei Beaufschlagung mit einem minimalen Luftstrom 5 bereits eine Dehnungsendlage, also eine maximal gedehnte Stützstruktur 12, erreicht wird.

Bei einer elastischen Stützstruktur 12 dehnt sich diese beim Einschalten des Gebläses 4 und Beaufschlagung mit dem Luftstrom 5 um einen definierten Weg S (Fig. 5b) und weitet damit die Vlieswellen 14 (Auffalten der Vlieswellen 14), wodurch ein erhöhter Strömungsweg bzw. ein erhöhter Strömungsquerschnitt der Vlieswellen 14 freigegeben wird (Fig. 5b); es erhöht sich die wirksame Fläche des Vlieses 13. Wird das Gebläse 4 wieder ausgeschaltet, führt die elastische Stützstruktur 12 die Vlieswellen 14 in ihre Ausgangslage zurück (Fig. 5a). Die Dehnbarkeit der Stützstruktur 12 wird dabei vorzugsweise so gewählt, dass sich der freie Strömungsquerschnitt bei Beaufschlagung mit dem Luftstrom 5 verdoppelt oder im Wesentlichen verdoppelt. Alternativ oder zusätzlich zu der dargestellten runden oder radialen Form der Vlieswellen 14 kommt auch eine Form nach Art eines Schwalbenschwanzes oder eines Sägezahnes in Betracht. Des Weiteren können die genannten Formen auch kombiniert werden, also z.B. eine Mehrzahl von Sägezähnen auf einer radialen (Grund-) Form, wodurch sich die wirksame Oberfläche der Vlieswellen 14 noch weiter erhöhen lässt. Selbstverständlich ist unmittelbar ersichtlich, dass die Formgebung der Vlieswellen 14 nur durch die Möglichkeiten bei deren Fertigung beschränkt wird.

Die Stützstruktur 12 stabilisiert den Staubbeutel 10 bei Beaufschlagung mit dem von dem Gebläse 4 erzeugten Luftstrom 5. Die Staubraumrippen 3 sind damit zur Stabilisierung des Staubbeutels 10 nicht mehr erforderlich. Die Staubraumrippen 3 übernehmen nur noch oder zumindest im Wesentlichen nur noch die Führung des Luftstroms 5, wenn dieser durch die Beutelflächen austritt und sich zum Gebläse 4 bewegt.

Fig. 7 zeigt, dass der Staubbeutel 10 in einer Ausführungsform Bereiche umfasst, die mit Stützelementen 12a unterschiedlicher Elastizität als Stützstruktur 12 versehen sind, wodurch die Form des Staubbeutels 10 im aufgestülpten Zustand beeinflussbar ist. In diesem Ausführungsbeispiel weisen die Grundseiten einer prismatischen Beutelgeometrie des Staubbeutels 10 relativ starre bzw. nur eingeschränkt elastische Stützelemente 12a auf, wobei die Stützstruktur 12 der gewölbten Deckelfläche elastisch ausgeführt wird. Bei Beaufschlagung des Staubbeutels 10 mit dem Luftstrom 5 stellt sich dann die in der Fig. 7 gezeigte prinzipiell prismatische Form ein.

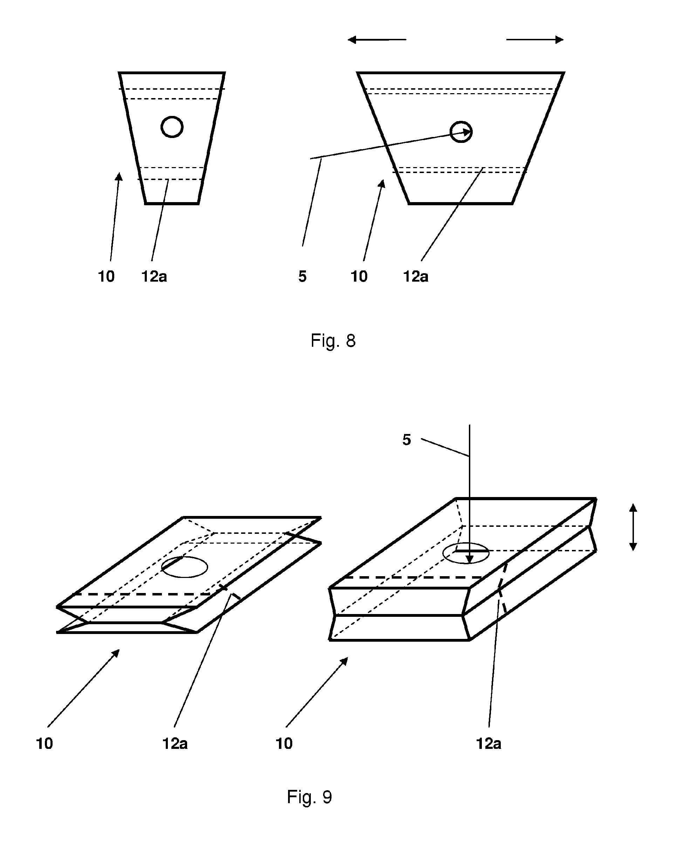

In einer weiteren Ausführungsform umfasst die Stützstruktur 12 streifenförmige Stützelemente 12a unterschiedlicher Länge, wobei dem Staubbeutel 10 dadurch ebenfalls unterschiedliche Formen gegeben werden bzw. durch Bereiche mit unterschiedlicher Elastizität wieder eine Vorabdefinition der Form vorgenommen wird, was die Darstellung in Fig. 8 veranschaulicht.

Fig. 9 zeigt eine weitere Ausführungsform des Staubbeutels 10. Bei einem in der Grundform kastenförmigen Staubbeutel 10, der aufgefaltet werden kann, sorgen die Stützelemente 12a für die Dynamisierung der Faltung und zur Stabilisierung einer Deckel- und Bodenfläche. Bei allen gezeigten und denkbaren weiteren Staubbeutelformen ist also die Stützstruktur 12 zur Definition eines aufgefalteten Volumens, einer aufgefalteten Geometrie des Staubbeutels 10, wirksam.

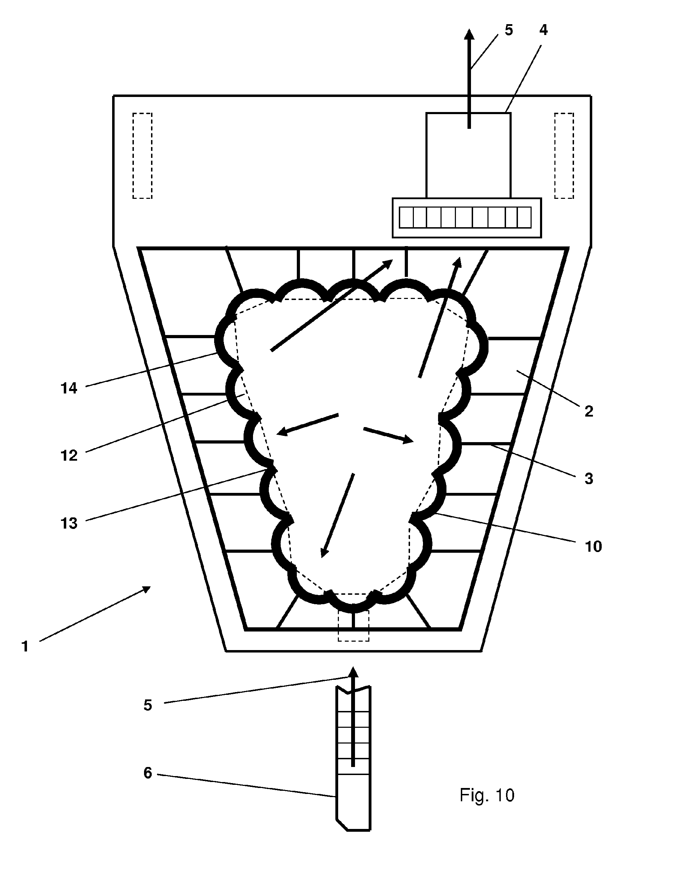

Durch beispielsweise eine runde oder radiale Form der Vlieswellen 14 wird ferner gewährleistet, dass sie bei Beaufschlagung mit dem Luftstrom 5 nur punktuell die Staubraumrippen 3, insbesondere deren Spitzen, berühren. Dies ist bei der in Fig. 10 dargestellten Ausführungsform schematisch vereinfacht veranschaulicht, wobei die Darstellung sowohl für einen Staubbeutel 10 mit elastischer Stützstruktur 12 wie auch mit nicht elastischer Stützstruktur 12 gilt. Günstig ist jedenfalls, wenn die Bogenweite der Vlieswellen 14 einfach oder in ganzzahligen Vielfachen wenigstens genau so groß wie der Abstand der als Stützrippen fungierenden Staubraumrippen 3 ist. Selbst wenn eine Vlieswelle 13, z.B. beim Entfalten des Staubbeutels 10, in einen Zwischenraum der Staubraumrippen 3 rutscht, berührt diese an dieser Stelle nicht flächig die Wand des Staubraums 2. Durch die wellenförmige Oberfläche des Staubbeutels 10 wird gewährleistet, dass es - wenn überhaupt - immer nur einen punkt- oder linienförmigen, d. h. also einen eindimensionalen Kontakt geben kann. Der Staubbeutel 10 wird dabei immer optimal vom Luftstrom 5 durchströmt und das Vlies 13 homogen vom Staub durchsetzt. Dadurch wird die Standzeit des Staubbeutels 10 optimal ausgenutzt. In einer nicht dargestellten Ausführungsform greifen die Spitzen der Staubraumrippen 3 in die oder in einzelne Zwischenräume zwischen je zwei benachbarten Vlieswellen 14. Auch bei dieser Ausführungsform ergeben sich die gleichen günstigen Verhältnisse hinsichtlich optimaler Durchströmung, homogenem Staubdurchsatz und verbesserter Standzeit.

Durch die Dynamisierung der Staubbeuteloberfläche infolge der elastischen Stützstruktur 12 und der strukturierten, insbesondere wellenförmigen Ausformung des Vlieses 13 wird dafür gesorgt, dass innerhalb der Vlieswellen 14 gesammelter Staub nach dem Ausschalten des Staubsaugers 1 wieder vom Vlies 13 abfällt, was ebenfalls zu einer Standzeitverlängerung des Beutels 10 führt. Das Vlies 13 wird praktisch durch das Ein- und Ausschalten des Staubsaugers 1 regeneriert.

Die Ausführungsbeispiele sind nicht als Einschränkung der Erfindung auf Staubbeutel 10 zu verstehen, vielmehr sind im Rahmen der vorliegenden Beschreibung basierend auf dem gleichen Lösungsansatz Modifikationen möglich, die auch in anderen Filtrationsvorrichtungen Verwendung finden können.

Zusammenfassend lassen sich einzelne Aspekte der vorgeschlagenen Neuerung damit wie folgt herausstellen: Es wird eine Filtrationsvorrichtung offenbart, die z.B. für einen Staubbeutel 10 verwendbar ist, der sich infolge seines Aufbaus selbst stabilisiert und damit die Form des Staubraums 2 vorgibt und darüber hinaus durch die Dynamisierung der Staubbeuteloberfläche eine strömungsoptimierte Beladung mit Staub ermöglicht. Ein Staubsauger 1 mit einem solchen Staubbeutel 10 zeichnet sich dadurch aus, dass einerseits das Vlies 13 auf der Stützstruktur 12 so angebracht ist, dass es eine Mehrzahl von Vlieswellen 14 ausbildet und dass andererseits ein Abstand der Vlieswellen 14 bei gedehnter Stützstruktur 12 auf einen Abstand der Staubraumrippen 3 abgestellt ist.

### Bezugszeichenliste

- 1: Staubsauger
- 2: Staubraum
- 3: Staubraumrippe
- 4: Gebläse
- 5: Luftstrom
- 6: Schlauch
- 10: Staubbeutel
- 11: Beutelöffnung
- 12, 12a: Stützstruktur
- 13: Vlies
- 14: Vlieswelle

## Patentansprüche

1. System bestehend aus einem Staubsauger (1) und einem dafür vorgesehenen Staubbeutel (10), wobei der Staubsauger (1) einen Staubraum (2) mit Staubraumrippen (3) und der Staubbeutel (10) auf einer Stützstruktur (12) ein Vlies (13) aufweist, **gekennzeichnet durch**,
eine Mehrzahl von Vlieswellen (14) in dem Vlies (13) und
einen auf einen Abstand der Staubraumrippen (3) abgestellten Abstand der Vlieswellen (14).

2. System nach Anspruch 1, wobei jede Staubraumrippe (3) ein in den Staubraum (2) ragendes freies Ende aufweist und der Abstand der Vlieswellen (14) auf den Abstand der freien Enden der Staubraumrippen (3) abgestellt ist.

3. System nach Anspruch 1 oder 2, wobei die Stützstruktur (12) des Staubbeutels (10) zur Definition einer an den Staubraum (2) angepassten Geometrie des Staubbeutels (10) wirksam ist.

4. System nach einem der vorangehenden Ansprüche, wobei die Stützstruktur (12) des Staubbeutels (10) quer zu einer Längsrichtung der Vlieswellen (14) dehnbar ist.

5. System nach Anspruch 4, wobei ein von einem Gebläse (4) des Staubsaugers (1) generierter Luftstrom (5) eine Dehnung der Stützstruktur (12) des Staubbeutels (10) bewirkt.

6. System nach Anspruch 5, wobei der von dem Gebläse (4) generierte Luftstrom (5) eine Dehnung der Stützstruktur (12) des Staubbeutels (10) derart bewirkt, dass sich der auf den Abstand der Staubraumrippen (3) abgestellte Abstand der Vlieswellen (14) einstellt.

7. System nach einem der Ansprüche 4, 5 oder 6, wobei sich ein freier Strömungsquerschnitt des Staubbeutels (10) bei Beaufschlagung mit dem Luftstrom (5) verdoppelt oder im Wesentlichen verdoppelt.

8. System nach einem der vorangehenden Ansprüche, mit einer Bogenweite der Vlieswellen (14), die bei gedehnter Stützstruktur (12) einfach oder in ganzzahligen Vielfachen zumindest genauso groß wie der Abstand der Staubraumrippen (3) ist.

9. System nach einem der vorangehenden Ansprüche, wobei bei gedehnter Stützstruktur (12) Spitzen der Staubraumrippen (3) in Zwischenräume zwischen je zwei Vlieswellen (14) eingreifen.

## Geänderte Patentansprüche

### Geänderte Patentansprüche gemäss Regel 137(2) EPÜ.

**1.** System bestehend aus einem Staubsauger (1) und einem dafür vorgesehenen Staubbeutel (10), wobei der Staubsauger (1) einen Staubraum (2) mit Staubraumrippen (3) und der Staubbeutel (10) auf einer Stützstruktur (12) ein Vlies (13) aufweist,
**gekennzeichnet durch**,
eine Mehrzahl von Vlieswellen (14) in dem Vlies (13) und
einen derart auf einen Abstand der Staubraumrippen (3) abgestellten Abstand der Vlieswellen (14);dass **durch** diese Abstimmung des Abstandes der Vlieswellen auf den Abstand der Staubraumrippen ein partielles oder großflächiges Anliegen von Abschnitten des Staubbeutels an der Innenoberfläche des Staubraums vermieden wird.
